# EUROPEAN PATENT APPLICATION

(11) **EP 3 489 934 A1**
(43) Date of publication of application: **29.05.2019**
(21) Application number: 17830190.9
(22) Date of filing: 13.02.2017
(51) Int. Cl.: G09F 9/00

(54) **FLEXIBLE DEVICE**

(30) Priority: 19.07.2016 WO PCT/CN2016/090477; 19.07.2016 WO PCT/CN2016/090478; 19.07.2016 WO PCT/CN2016/090479
(71) Applicant: Shenzhen Royole Technologies Co., Ltd., Shenzhen, Guangdong 518172 (CN)
(72) Inventor: LIAO, Le, Shenzhen Guangdong 518052 (CN)
(74) Representative: Mewburn Ellis LLP
(86) International application number: PCT/CN2017/073362
(87) International publication number: WO 2018/014541

(57) **Abstract**

A flexible device comprises a flexible screen and a supporting assembly for supporting the flexible screen. The supporting assembly comprises a plurality of moving members and connecting members each for movably connecting two adjacent moving members of the plurality of moving members. The adjacent moving members moving relatively to support the flexible screen in an unfolded state or a bent state. The flexible device can be transformed into different forms according to requirements, so as to adapt to application requirements of various shapes of flexible screen.

## Description

### TECHNICAL FIELD

The present disclosure relates to flexible devices, and more particularly to a flexible device for applying to a flexible screen.

### BACKGROUND

The existing electronic devices, such as mobile phones, tablets, video players and the like with display screens are straight panel due to limitations of materials of screens. With development of screen technology, the industry has developed flexible display screens, and it is expected to develop various types of electronic devices that can be bent or folded in the future. Due to flexible nature of the flexible display screen, a corresponding movable mechanical structure is required to support it. Obviously, a support structure of the existing hard display screen cannot meet the needs of bending or folding.

### SUMMARY

The present disclosure provides a flexible device that can meet the needs of bending or folding.

A flexible device includes a flexible screen and a supporting assembly for supporting the flexible screen. The supporting assembly includes a plurality of moving members and connecting members each connecting two adjacent moving members of the plurality of moving members. Adjacent moving members of the plurality of moving members move relatively to support the flexible screen in an unfolded state or a bent state.

Each of the plurality of moving members rotates relative to an adjacent moving member around a rotating center, and the rotating center of each of the plurality of moving members rotating relative to the adjacent moving member is in the flexible screen.

Each of the plurality of moving members includes a base, and a limit groove and a through hole defined on the base, each of the connecting members passes through the limit groove of each of the plurality of moving members and penetrates the through hole of the adjacent moving member.

The limit groove of each of the plurality of moving members is in an arc shape, and a center of the limit groove is in the flexible screen.

Each of the plurality of moving members further includes a first limiting part and a second limiting part respectively located on opposite sides of the base, the second limiting part of the each of the plurality of moving members movably abuts against the first limiting part of the adjacent moving member.

A moving track of the second limiting part of the each of the plurality of moving members relative to the first limiting part of the adjacent moving member is in an arc shape, and a center of the moving track is in the flexible screen.

The first limiting part includes a first positioning surface in an arc shape, the second limiting part includes a second positioning surface in an arc shape, centers of the first positioning surface and the second positioning surface are in the flexible screen.

The first positioning surface and the second positioning surface are respectively inclined toward opposite ends of the base.

A height of a center of the first positioning surface is the same as a height of a center of the second positioning surface.

The center of the second positioning surface coincides with the center of the limit groove along a first direction, and the first direction is from one side of the base to an opposite side of the base.

A bottom surface of the base movably supports the flexible screen.

An area of the bottom surface of the base supporting the flexible screen when the flexible device is in the unfolded state is greater than an area of the bottom surface of the base supporting the flexible screen when the flexible device is in the bent state.

A top surface of the base is curved surface, when the flexible device is in the unfolded state, the top surfaces of the bases of the adjacent moving members are staggered; when the flexible device is in the bent state, the top surfaces of the bases of the adjacent moving members are continuous.

A center of the top surface of the base is below the flexible screen.

The base includes a first base plate and a second base plate manufactured independently of each other, each of the connecting members includes a head portion located between the first base plate and the second base plate, and an end portion penetrating into the limit groove of the first base plate, and a rod portion penetrating into the limit groove of the second base plate, the end portion and the rod portion are located on two opposite sides of the head portion.

A receiving groove is defined on a surface of the second base plate facing the first base plate, and the connecting member further includes a locking member fixed to an end of the rod member, the locking member is received in the receiving groove of the second base plate of the adjacent moving member.

The flexible device further includes a separated first housing and a second housing, the first housing and the second housing are separated through a groove, the flexible screen includes a bonding portion that is attached the first housing and the second housing, and a connecting portion corresponding to the groove, the supporting assembly supports the connecting portion.

The flexible device further includes a support plate attached to the connecting portion, a bottom surface of each of the plurality of moving members is movably abutted against the support plate.

The support assembly is received in the groove, and the moving members located on opposite sides of the support assembly are fixed to the first housing and the second housing.

The support assembly extends from the first housing toward the second housing when the flexible device is in the unfolded state.

By using a plurality of moving members that can be movable relatively, the flexible device can be switched between the unfolded state and the bent state according to need, thereby facilitating bending or folding of the flexible electronic device with the flexible device.

### BRIEF DESCRIPTION OF THE ACCOMPANYING DRAWINGS

To describe technology solutions in the embodiments of the present disclosure more clearly, the following briefly introduces the accompanying drawings required for the embodiments. Obviously, the accompanying drawings in the following description show merely some embodiments of the present disclosure, those of ordinary skill in the art may also derive other obvious variations based on these accompanying drawings without creative efforts.
FIG. 1 is a perspective view of a flexible device according to one embodiment of the present disclosure.
FIG. 2 is an exploded view of the flexible device of FIG. 1.
FIG. 3 is an exploded view of a supporting assembly of the flexible device of FIG. 2.
FIG. 4 is a partial enlarged view of the supporting assembly of FIG. 3.
FIG. 5 is an enlarged view of a moving member of the supporting assembly of FIG. 4.
FIG. 6 is a rear perspective view of the moving member of FIG. 5.
FIG. 7 is an upper left perspective view of the moving member of FIG. 5.
FIG. 8 is an inverted view of the moving member of FIG. 5.
FIG. 9 is a plan view of the moving member of FIG. 5.
FIG. 10 is a front view of the moving member of FIG. 5.
FIG. 11 is a cross-sectional view of the moving member of FIG. 9 taken along line I-I.
FIG. 12 is a rear view of the moving member of FIG. 5.
FIG. 13 is a cross-sectional view of the moving member of FIG. 9 taken along line II-II.
FIG. 14 is a cross-sectional view of the supporting assembly of FIG. 2.
FIG. 15 is an enlarged view of one moving member located at one end of the supporting assembly.
FIG. 16 is a diagram showing a bent state of the flexible device.
FIG. 17 is a cross-sectional view of the flexible device of FIG. 16.
FIG. 18 is an enlarged view of the supporting assembly according to another embodiment of the present disclosure.
FIG. 19 is an exploded view of the supporting assembly of FIG. 18.
FIG. 20 is an enlarged view of a first base plate of the moving member of the supporting assembly of FIG. 18.
FIG. 21 is a rear perspective view of the first base plate of FIG. 20.
FIG. 22 is an enlarged view of a second base plate of the moving member of the supporting assembly of FIG. 18.
FIG. 23 is a rear perspective view of the second base plate of FIG. 22.
FIG. 24 is a front view of the first base plate of FIG. 20;
FIG. 25 is a rear view of the first base plate of FIG. 20.
FIG. 26 is a front view of the second base plate of FIG. 22.
FIG. 27 is a rear view of the second base plate of FIG. 22.
FIG. 28 is a cross-sectional view of the supporting assembly of FIG. 18.

### DETAILED DESCRIPTION OF ILLUSTRATED EMBODIMENTS

The technical solutions in the present disclosure will be described clearly and completely in the following with reference to the accompanying drawings in the present disclosure.

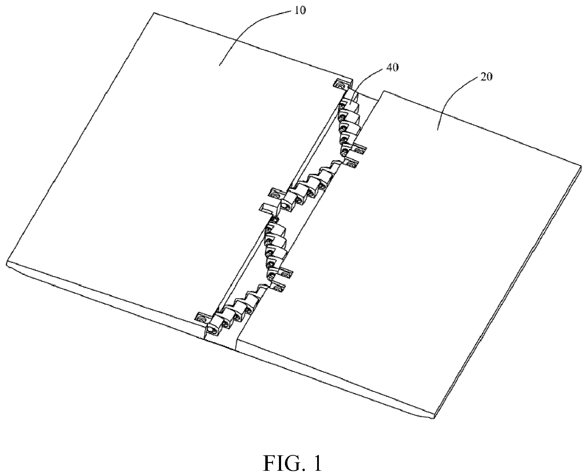

Referring to FIGS. 1-2, a flexible device according to one embodiment of the present disclosure is shown. The flexible device includes a first housing 10, a second housing 20, a flexible screen 30 attached to the first housing 10 and the second housing 20, and a supporting assembly 40 supporting the flexible screen 30. The flexible device can be switched between an unfolded state and a folded/bent state. In the unfolded state, the flexible screen 30 is unbent and expanded, the first housing 10 and the second housing 20 are arranged side by side; in the folded/bent state, the flexible screen 30 is folded or bent, and the first housing 10 and the second housing 20 are stacked one by one.

The first housing 10 and the second housing 20 are substantially in flat-plate shape, and they can be made of hard materials such as metal or plastic. The first housing 10 and the second housing 20 may be hollow for receiving various electronic components such as a control module, a storage module, a drive module, a power module, a switch module, a speaker module, a sensor module, and the like. The first housing 10 and the second housing 20 are separated from each other with a narrow groove 100 defined therebetween.

One side of the first housing 10 defines a plurality of grooves 102 along a length direction thereof for fixing the supporting assembly 40. In this embodiment, the number of the grooves 102 is four, two of which are respectively close to opposite ends of the first housing 10, and the other two of which are close to a middle part of the first housing 10. The groove 102 is sunken from a top surface of the first housing 10 to inside of the first housing 10, that is, the groove 102 does not cut through the first housing 10 from top surface to bottom surface. The groove 102 also laterally cuts through one side surface of the adjacent first housing 10. The bottom surface of the groove 102 defines a circular screw hole for a screw passing through to fix the support assembly 40 to the first housing 10. One side of each groove 102 also defines an avoiding slot 104 in the first housing 10. The avoiding slot 104 is sunken from the bottom surface of the first housing 10 to the inside of the first housing 10, that is, the avoiding slot 104 does not cut through the first housing 10 from the bottom surface to the top surface. The avoiding slot 104 also laterally cuts through one side surface of the adjacent first housing 10. The avoiding slot 104 is used for receiving certain portions of the supporting assembly 40 to reduce space occupied by the supporting assembly 40. Each avoiding slot 104 is disposed with one groove 102 in pairs.

One side of the second housing 20 close to the first housing 10 defines a plurality of grooves 202 for fixing the supporting assembly 40. In this embodiment, the number of the grooves 202 is also four, two of which are close to one end of the second housing 20, and the other two of which are close to opposite end of the second housing 20. In particular, a distance of one groove 202 closest to one end of the second housing 20 to the end of the second housing 20 is greater than that of one groove 102 closest to one end of the first housing 10 to the end of the first housing 10. Along the length direction of the first housing 10 or the second housing 20, the grooves 202 of the second housing 20 and the grooves 102 of the first housing 10 are staggered with each other to fix different portions of the supporting assembly 40. The groove 202 is sunken downward from a top surface of the second housing 20 to the inside of the second housing 20, that is, the groove 202 does not cut through the second housing 20 from the top surface to the bottom surface. The groove 202 also laterally cuts through one side surface of the adjacent first housing 10. The bottom surface of the groove 202 defines a circular screw hole for a screw passing through to fix the support assembly 40 to the second housing 20. One side of each groove 202 also defines an avoiding slot in the second housing 20. The avoiding slot is sunken upward from a bottom surface of the second housing 20 to inside of the second housing 20, that is, the avoiding slot does not cut through the second housing 20 from the bottom surface to the top surface. The avoiding slot also laterally cuts through one side surface of the adjacent first housing 10. The avoiding slot is used for receiving certain portions of the support assembly 40 to reduce a space occupied by the supporting assembly 40. Each avoiding slot is disposed with one groove 202 in pairs.

The flexible screen 30 is attached to the bottom surfaces of the first housing 10 and the second housing 20. The flexible screen 30 can be a flexible display screen, a flexible touch screen, a combination of the two, or other types of flexible screens. The flexible screen 30 includes a bonding portion 32 bonded to the first housing 10 , a bonding portion 32 bonded to the second housing 20, and a connecting portion 34 between the two bonding portions 32. The connecting portion 34 is located in the groove 100 between the first housing 10 and the second housing 20. When the flexible device is unfolded, the bonding portions 32 and the connecting portion 34 lie in a plane; when the flexible device is folded or bent, the connecting portion 34 bends correspondingly, and the two bonding portion 32 face with each other, and the first housing 10 and the second housing 20 are disposed opposite to each other.

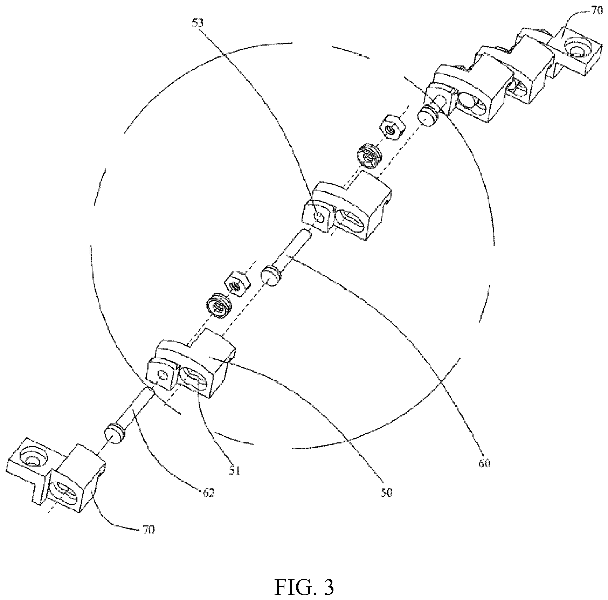

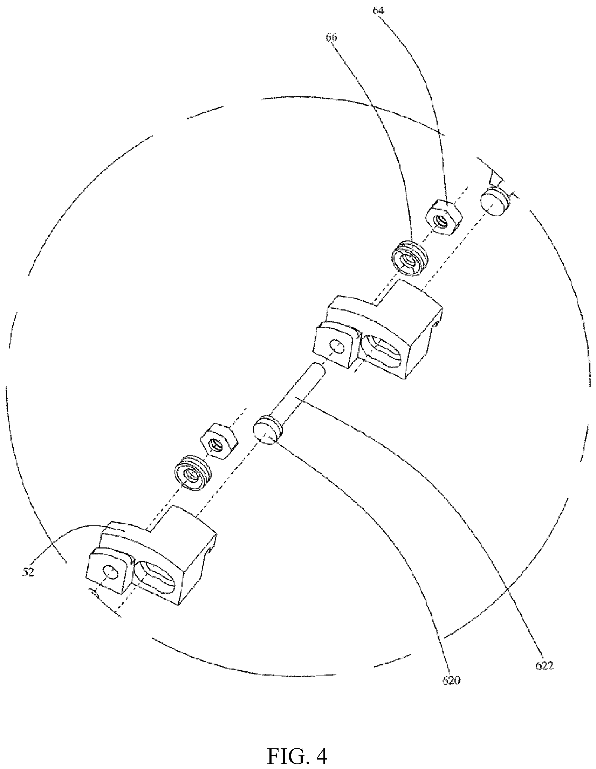

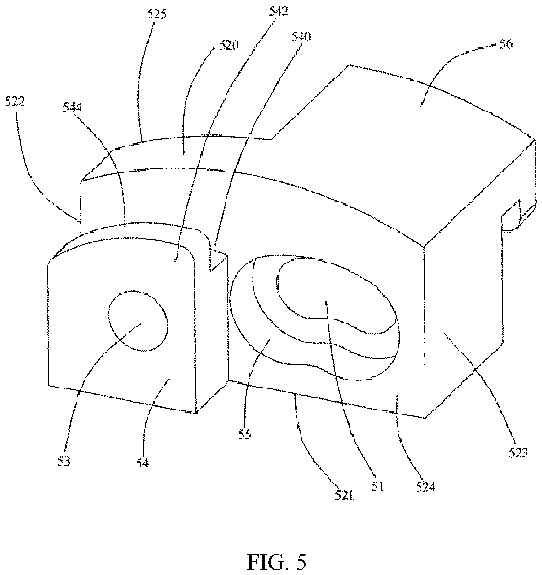

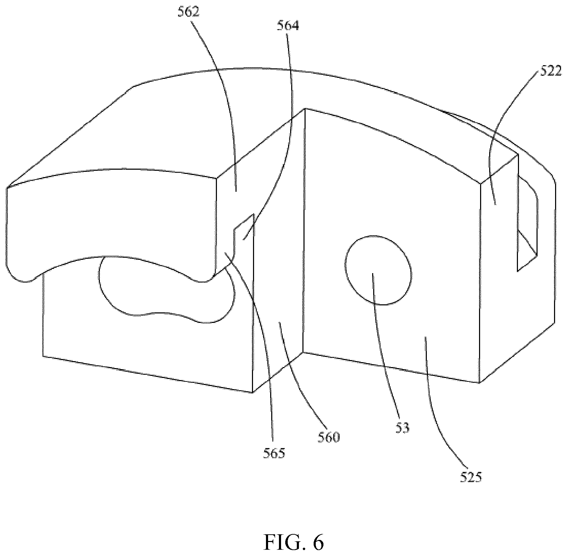

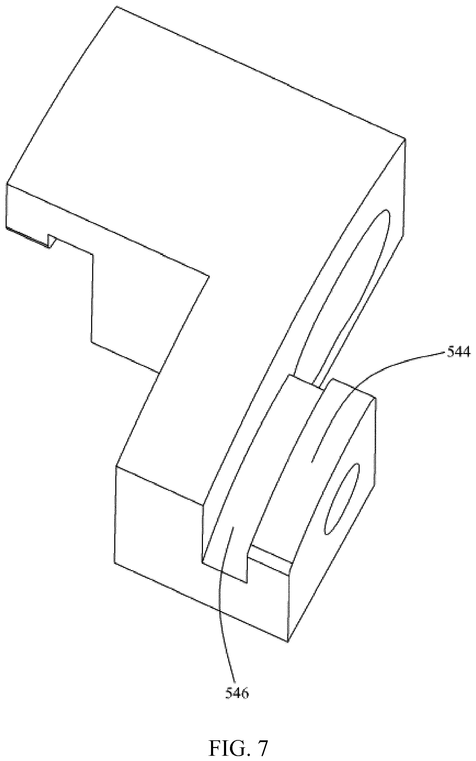

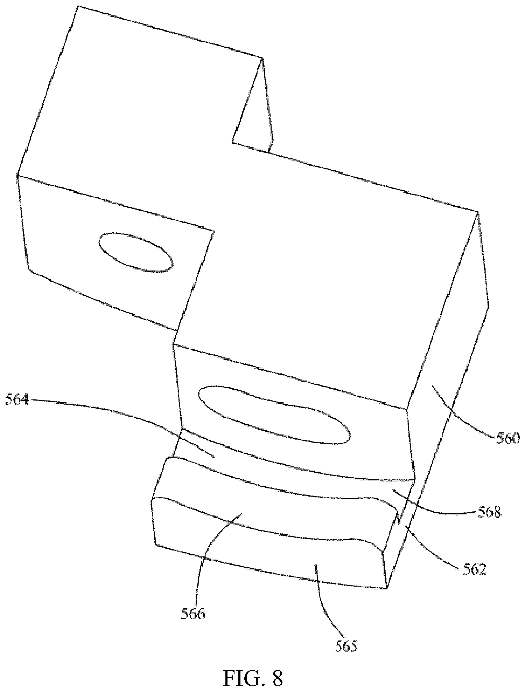

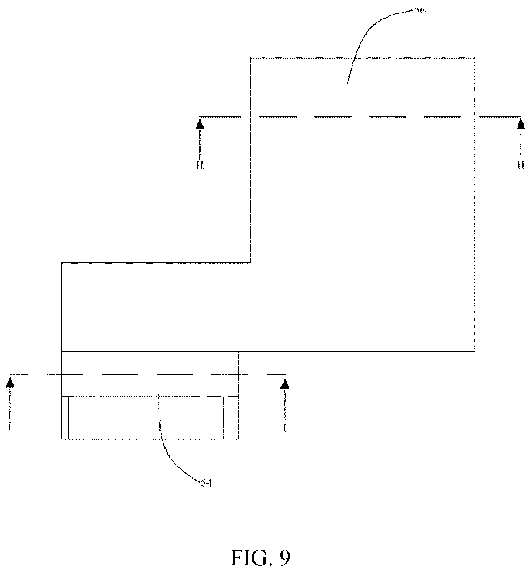

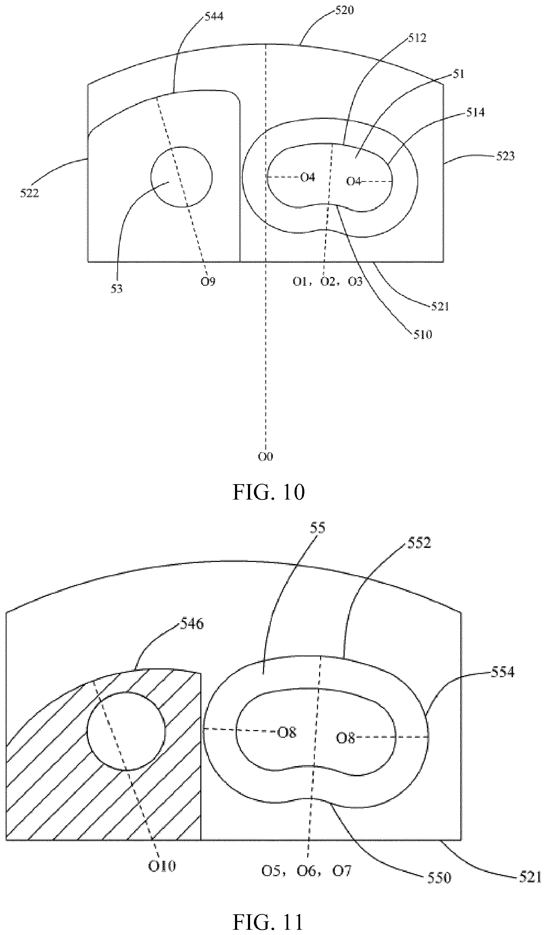

Referring to FIGS. 3 and 4, in this embodiment, there are four groups of supporting assemblies 40, and each group of supporting assembly 40 connects the first housing 10 and the second housing 20 along a length direction of the first housing 10 or the second housing 20. Each group of the supporting assembly 40 includes a plurality of moving members 50 coupled in series. Each moving member 50 is movably coupled to the adjacent moving member 50 through a connecting member 60, thereby movably supporting the flexible screen 30. Referring to FIGS. 5-13, in the embodiment, the moving member 50 includes a base 52, a first limiting part 54 and a second limiting part 56 respectively protruding from front side and rear side of the base 52. The base 52 is substantially circular sector-shaped and includes a top surface 520, a bottom surface 521, a left end surface 522, a right end surface 523, a front side surface 524, and a rear side surface 525. The bottom surface 521 of the base 52 is a rectangular plane, and the left end surface 522 and the right end surface 523 are rectangular planes perpendicular to the bottom surface 521. The top surface 520 of the base 52 is a convex surface that protrudes upward in a direction away from the bottom surface 521. The height of the top surface 520 gradually increases from the left end surface 522, the right end surface 523 to a middle part, thereby the top surface being curved. A center O0 of the top surface 520 is located below the bottom surface 512 of the base 52 (see FIG. 10). The front side surface 524 and the rear side surface 525 are perpendicular to the bottom surface 521, the left end surface 522, and the right end surface 523 at the same time. The area of the front side surface 524 and the rear side surface 525 is greater than that of the left end surface 522 and the right end surface 523. The base 52 defines a limit groove 51 and a through hole 53 cut through the front side surface 524 and the rear side surface 525. The limit groove 51 is located close to the right end surface 523 of the base. The limit groove 51 is in an arc shape, and substantially inclined to the right and curved toward the top surface, and its center O1 is located below the bottom surface 521 of the base 52 (see FIG. 10). The limit groove 51 includes a bottom surface 510, a top surface 512, and two side surfaces 514 coupling the top surface 510 and the bottom surface 512. The bottom surface 510 is an up-convex curved surface, the top surface 512 is an up-concave curved surface, and the side surfaces 514 are curved surfaces concaved to the left and right respectively. In this embodiment, the curvature of the bottom surface 510 is greater than that of the top surface 512, and the bottom surface 510 is paralleled to the top surface 512. The curved surface of the bottom surface 510 is a part of an arc surface, and its center O2 is located below bottom surface 521 of the base 52. The curved surface of the top surface 512 is also a part of an arc surface, and its center O3 is located below the bottom surface 521 of the base 52 and coincides with the center O2 of the bottom surface 510. In particular, the center O2 of the bottom surface 510 and the center O3 of the top surface 512 are located close to the bottom surface 521 of the base 52 and coincide with the center O1 of the limit groove 51. The side surfaces 514 smoothly connect the top surface 512 and the bottom surface 510. The side surfaces 514 each is also a part of an arc surface, but its center O4 is located inside the limit groove 51, and is higher than the bottom surface 510, and is below the top surface 512. The centers O4 of the two side surfaces 514 are different in height, wherein, the center O4 of the left side surface 514 is higher than the center O4 of the right side surface 514, causing the limit groove 51 to incline to the right. In other words, the center O3 of the top surface 512 and the center O2 of the bottom surface 510 are below the centers O4 of the side surfaces 514. In this embodiment, the base 52 further defines a positioning groove 55 on an outer circumference of the limit groove 51. The positioning groove 55 is located close to the front side surface 524 and surrounds the limit groove 51. The area of the positioning groove 55 is greater than the area of the limit groove 51. The positioning groove 55 is also in an arc shape, and its center O5 is below the bottom surface 521 of the base 52 (see FIG. 11). The positioning groove 55 extends rearward from the front side surface 524 of the base 52 to inside of the base 52, that is, the positioning groove 55 does not cut through the base 52 from front surface to back surface. The positioning groove 55 also includes a top surface 552, a bottom surface 550, and two side surfaces 554. The top surface 552 of the positioning groove 55 is also a concave curved surface and is parallel to the top surface 512 of the limit groove 51; the bottom surface 550 of the positioning groove 55 is a convex curved surface and is parallel to the bottom surface 510 of the limit groove 51; the side surfaces 554 of the positioning groove 55 are concave curved surfaces, and parallel to the side surfaces 514 of the limit groove 51 respectively. In this embodiment, the curvature of the bottom surface 550 of the positioning groove 55 is greater than that of the top surface 552. The curved surface of the bottom surface 550 is a part of an arc surface, and its center O6 is located below the bottom surface 521 of the base 52. The curved surface of the top surface 552 is also a part of an arc surface, and its center O7 is located below the bottom surface 521 of the base 52, and coincides with the center O6 of the bottom surface 550 and the center O5 of the limit groove 51. In particular, the center O6 of the bottom surface 550 and the center O7 of the top surface 552 of the positioning groove 55 are located close to the bottom surface 521 of the base 52 and coincide with the center O2 of the bottom surface 510 and the center O3 of the top surface 512 of the limit groove 51 along a first direction. The first direction is from one side of the base 52 to an opposite side of the base 52. In the present embodiment, the first direction is from the front side surface 524 of the base 52 to the rear side surface 525 of the base 52 or from the rear side surface 525 to the front side surface 524. In other words, the first direction is a thickness direction of the base 52, or a depth direction of the limit groove 51 or the positioning groove 55. The side surfaces 554 of the positioning groove 55 smoothly couple the top surface 552 and the bottom surface 550. The side surfaces 554 each is also a part of an arc surface, and its center O8 is located inside the positioning groove 55, and is higher than the bottom surface 550 and is below the top surface 552. The centers O8 of the two side surfaces 554 are different in height, wherein the center O8 of the left side surface 554 is higher than the center O8 of the right side surface 554, thus causing the positioning groove 55 to incline to the right. The centers O8 of the side surfaces 554 of the positioning groove 55 and the centers O4 of the side surfaces 514 of the limit groove 51 coincide in the first direction.

The first limiting part 54 and the second limiting part 56 are respectively close to opposite ends of the base 52. The first limiting part 54 is located at a left end of the front side surface 524 of the base 52, which is adjacent to the limit groove 51 and the positioning groove 55. The first limiting part 54 protrudes forward from the front side surface 524 of the base 52, and its top surface defines a groove 540 close to the front side surface 524 of the base 52. The portion of the top surface of the first limiting part 54 without the groove 540 forms a first limiting piece 542 protruding upward. The bottom surface of the first limiting part 54 is aligned with the bottom surface 521 of the base 52, the left end surface is aligned with the left end surface 522 of the base 52, the right end surface is located close to the positioning groove 55, and the rear side surface is engaged with the front side surface 524 of the base 52. The height of the top surface of the first limiting part 54 is less than that of the top surface 520 of the base 52. The bottom surface, the left end surface, and the right end surface of the first limiting part 54 are in plane shape, and the top surface is a convex arc surface. The top surface of the first limiting part 54 forms a first limiting surface 544. The first limiting surface 544 is a part of an arc surface, and its center O9 is located below the bottom surface 521 of the base 52 (see FIG. 10), and the height of the center O9 is consistent with the heights of the center O1 of the limit groove 51, the center O5 of the positioning groove 55, the center O2 of the bottom surface 510, the center O3 of the top surface 512, the center O6 of the bottom surface 550, the center O7 of the top surface 552. In particular, the center O9 of the first limiting surface 544 is close to the left end surface 522 of the base 52; the center O1 of the limit groove 51, the center O5 of the positioning groove 55, and the center O2 of the bottom surface 510, the center O3 of the top surface 512, the center O6 of the bottom surface 552 and the center O7 of the top surface 552 are close to the right end surface 523 of the base 52. The curvature of the first limiting surface 544 is greater than that of the top surface 520 of the base 52. Preferably, the curvature of the first limiting surface 544 is less than that of the top surface 552 and the bottom surface 550 of the positioning groove 55, and is further less than the that of the top surface 512 and the bottom surface 510 of the limit groove 51. An inclination direction of the first limiting surface 544 is the left, which is opposite to the inclination direction of the positioning groove 55 and the limit groove 51. The first limiting piece 542 is spaced from the front side surface 524 of the base 52 through the groove 540. The groove 540 extends to inside of the first limiting part 54 from top to bottom and cuts through the left end surface and the right end surface of the first limiting part 54 along a left-right direction. The bottom surface of the groove 540 forms a first positioning surface 546 (see FIG. 11). The first positioning surface 546 is below the first limiting surface 544 and is closer to the base 52 than the first limiting surface 544. The first positioning surface 546 is also a part of an arc surface, its center O10 is located below the bottom surface 521 of the base 52, and the height of the center O10 is consistent with the heights of center O1 of the limit groove 51, the center O5 of the positioning groove 55, the center O2 of the bottom surface 510, the center O3 of the top surface 512, the center O6 of the bottom surface 550 and the center O7 of the top surface 552, and the center O9 of the first limiting surface 544. The center O10 of the first positioning surface 546 coincides with the center O9 of the first limiting surface 544 along the first direction. The heights of the center O10 of the first positioning surface 546 and the center O9 of the first limiting surface 544 are both greater than height of the center O0 of top surface 520 of the base 52. In particular, the center O9 of the first limiting surface 544 and the center O10 of the first positioning surface 546 are close to the left end surface 522 of the base 52. The center O1 of the limit groove 51, the center O5 of the positioning groove 55, and the center O2 of the bottom surface 510, the center O3 of the top surface 512, the center O6 of the bottom surface 550, the center O7 of the top surface 552 are close to the right end surface 523 of the base 52. The first positioning surface 546 is parallel to the first limiting surface 544. The curvature of the first positioning surface 546 is greater than the curvature of the top surface 520 of the base 52. Preferably, the curvature of the first positioning surface 546 is greater than the curvature of the first limiting surface 544 and the curvature of the top surface 552 of the positioning groove 55 ,and is less than the curvature of the top surface 512 and the curvature of the bottom surface 510 of the limit groove 51 and the curvature of the bottom surface 550 of the positioning groove 55. The inclination direction of the first positioning surface 546 is the left, which is opposite to the inclination direction of the positioning groove 55 and the limit groove 51, and is the same as the inclination direction of the first limiting surface 544. The through hole 53 of the base 53 also extends to the front side surface of the first limiting part 54 to form a hole that cuts through from the front to the back.

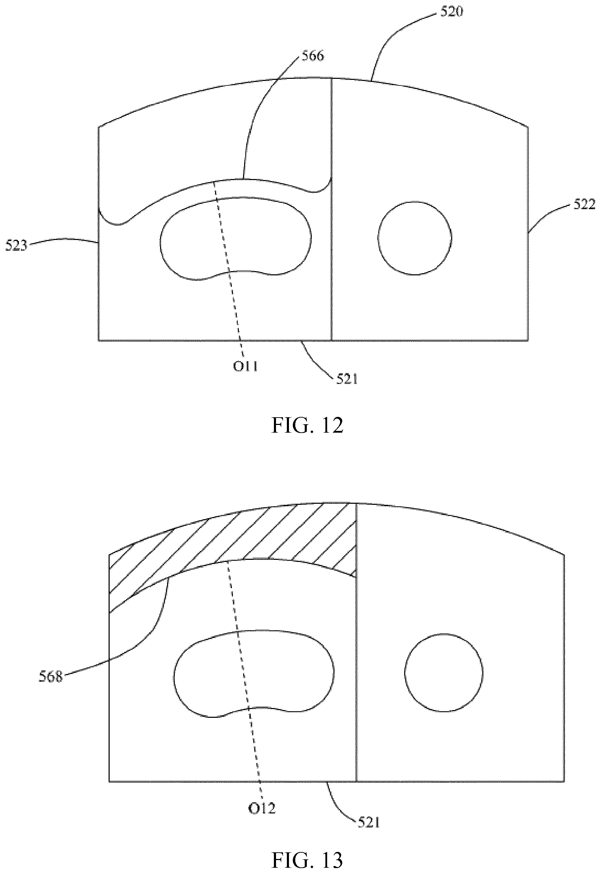

The second limiting part 56 is located on the rear side surface 525 of base 52. The second limiting part 56 protrudes rearward from the rear side surface 525 of the base 52. The second limiting part 56 includes a connecting plate 560 and a protrusion 562 protruding from the connecting plate 560. The bottom surface of the connecting plate 560 is aligned with the bottom surface 521 of the base 52, the left end surface of the connecting plate 560 is close to the through hole 53, the right end surface of the connecting plate 560 is aligned with the right end surface 523 of the base 52, and the top surface of the connecting plate 560 is aligned with the top surface 520 of the base 52. The connecting plate 560 is coupled to the rear side surface 523 of the base 52. The area in which the connecting plate 560 is engaged with the base 52 is greater than the area in which the first limiting part 54 is engaged with the base 52. The protrusion 562 protrudes from an upper portion of the rear side surface of the connecting plate 560. The top surface of the protrusion 562 is aligned with the top surface of the connecting plate 560. The top surface of the protrusion 562, the top surface of the connecting plate 560, and the top surface 520 of the base 52 are all convex arc surfaces, and are smoothly connected. Therefore, the top surface of each moving member 52 forms a continuous arc surface. The left end surface of the protrusion 562 is aligned with that of the connecting plate 560, and the right end surface of the protrusion 562 is aligned with that of the connecting plate 560, and the bottom surface of the protrusion 562 is higher than that of the connecting plate 560. The bottom surface of the protrusion 562 defines a groove 564. The groove 564 extends to inside of the protrusion 562 from the bottom to the top. The groove 564 also cuts through the left end surface and the right end surface of the protrusion 562 in a left-right direction. The portion of the bottom surface of the protrusion 562 without the groove 564 forms a second limiting piece 565. The height of the second limiting piece 565 is greater than the height of the first limiting piece 542. The second limiting piece 565 is separated from the rear side surface of the connecting plate 560 through the groove 564. The bottom surface of the second limiting piece 565 forms a second positioning surface 566 for abutting against the first positioning surface 546 of the rear adjacent moving member 50. The second positioning surface 566 is slightly higher than the first positioning surface 546. The second positioning surface 566 is a part of an arc surface, and its center O11 is located below the bottom surface 521 of the base 52 (see FIG. 12), and the height of the center O11 is consistent with the heights of the center O10 of the first positioning surface 546, the center O9 of the first limiting surface 544, the center O1 of the limit groove 51, the center O5 of the positioning groove 55, and the center O2 of the bottom surface 510, the center O3 of the top surface 512, the center O6 of the bottom surface 550, the center O7 of the top surface 552. Moreover, the center O11 of the second positioning surface 566 also coincides with the center O1 of the limit groove 51, the center O5 of the positioning groove 55, the center O2 of the bottom surface 510, the center O3 of the top surface 512, the center O6 of the bottom surface 550, and the center O7 of the top surface 552 along the first direction. In particular, the center O11 of the second positioning surface 566 is close to the right end surface 523 of the base 52; the center O10 of the first positioning surface 546 and the center O9 of the first limiting surface 544 are close to the left end surface 522 of the base 52. The curvature of the second positioning surface 546 is greater than the curvature of the top surface 520 of the base 52 and less than the curvature of the top surface 512 and the bottom surface 510 of the limit groove 51. An inclination direction of the second positioning surface 546 is the right, and is the same as that of the positioning groove 55 and the limit groove 51, and is opposite to that of the first limiting surface 544 and the first positioning surface 546.

The top surface of the groove 564 of the second limiting part 56 forms a second limiting surface 568. The second limiting surface 568 is higher than the second positioning surface 566, for abutting the first positioning surface 546 of the rear adjacent moving member 50. The second limiting surface 568 is closer to the base 50 than the second positioning surface 566. The second limiting surface 568 of the second limiting part 56 is part of an arc surface, and its center 012 is located below the bottom surface 521 of the base 52 (see FIG. 13), and the height of the center 012 is consistent with the heights of the center O10 of the first positioning surface 546, the center O9 of the first limiting surface 544, the center O11 of the second positioning surface 566, the center O1 of the limit groove 51, the center O5 of the positioning groove 55, the center O2 of the bottom surface 510, the center O3 of the top surface 512, the center O6 of the bottom surface 550, and the center O7 of the top surface 552. The center 012 of the second limiting surface 568 also coincides with the center O11 of the second positioning surface, the center O1 of the limit groove 51, the center O5 of the positioning groove 55, the center O2 of the bottom surface 510, the center O3 of the top surface 512, the center O6 of the bottom surface 550, the center O7 of the top surface 552 along the first direction. In particular, the center 012 of the second limiting surface 568, the center O11 of the second positioning surface 566 are close to the right end surface 523 of the base 52, the center O10 of the first positioning surface 546, the center O9 of the first limiting surface 544 are close to the left end surface 522 of the base 52. The second limiting surface 568 is parallel to the second positioning surface 566. The curvature of the second limiting surface 568 is greater than the curvature of the top surface 520 of the base 52. Preferably, the curvature of the second limiting surface 568 is also less than the curvature of the top surface 512 of the limit groove 51 and the top surface 552 of the positioning groove 55, and the bottom surface 510 of the limit groove 51, and the bottom surface 550 of the positioning groove 55 of the second positioning surface 566. An inclination direction of the second limiting surface 568 is the right, and the same as that of the second positioning surface 566, the positioning groove 55, and the limit groove 51, and is opposite to that of the first limiting surface 544 and the first positioning surface 546. The second positioning surface 566 and the second limiting surface 568 are both concave curved surfaces. The first positioning surface 546 and the first limiting surface 544 are both convex curved surfaces. The positioning groove 55 and the limit groove 51 of the base 52 also cut through the second limiting part 56. The height of the limit groove 51 is below the heights of the second positioning surface 566 and the second limiting surface 568.

Referring to FIGS. 3-4, the adjacent moving members 50 are coupled in series through the connecting member 60. In this embodiment, the connecting member 60, that coupling each two adjacent moving members 50 in series, includes a rod member 62 and a locking member 64 sleeved on the rod member 62. During assembly, the limit groove 51 and the positioning groove 55 of each moving member 50 are aligned with the through hole 53 of the rear adjacent moving member 50, and the second limiting part 56 of each moving member 50 abuts against the first limiting part 54 of the rear adjacent moving member 50, each first limiting part 54 of the moving member 50 abuts against the second limiting part 56 of the front adjacent moving member 50. The rod member 62 passes through the positioning groove 55 and the limit groove 51 of each moving member 50, and extends out from the through hole 53 of the rear moving member 50. The locking member 64 is locked to the portion of the rod member 62 that extending out the through hole 53 to limit the rod member 62. In this embodiment, the rod member 62 includes a head portion 620 and a rod portion 620 extending from the head portion 620. The rod portion 622 is received in the limit groove 51 and the through hole 53. The outer diameter of the head portion 620 is greater than the inner diameter of the through hole 53. The head portion 620 is received in the positioning groove 55 of the moving member 50 and abuts against the rear side surface of the positioning groove 55 of the moving member 50 to prevent the rod member 62 from falling off. One end of the rod portion 620 away from the head portion 620 forms screw threads. In this embodiment, the locking member 64 is a nut locked to the screw threads at the end of the rod portion 622 to prevent the rod member 62 from falling off. In order to adjust the rotational damping between the adjacent moving members 50, the rod portion 622 is further provided with a spring 66. The spring 66 is located between the rear side surface 525 of the moving member 50 and the front side surface of the nut. By adjusting the nut on the screw threads of the rod member 62, a degree to which the spring 66 is compressed can be adjusted, thereby adjusting the rotational damping between the adjacent moving members 50.

Through the connection of the rod members 62, the adjacent moving members 50 are movably coupled together in series. The first limiting piece 542 of the first limiting part 54 of each moving member 50 is inserted into the groove 564 of the second limiting part 56 of the front adjacent moving member 50. The rear side surface of the first limiting piece 542 of the first limiting part 54 of each moving member 50 abuts against the front side surface of the second limiting piece 565 of the second limiting part 56 of the front adjacent moving member 50, thereby limiting the two adjacent moving members 50 to prevent the two adjacent moving members 50 from being separated from each other. Moreover, the first limiting surface 544 of the first limiting part 54 of each moving member 50 abuts against the second limiting surface 568 of the second limiting part 56 of the front adjacent moving member 50, thereby limiting a track of a relative movement of the adjacent two moving members 50. The second limiting piece 565 of the second limiting part 56 of each moving member 50 is inserted into the groove 540 of the first limiting part 54 of the rear adjacent moving member 50. The front side surface of the second limiting piece 565 of the second limiting part 56 of each moving member 50 abuts against the rear side surface of the first limiting piece 542 of the first limiting part 54 of the rear adjacent moving member 50, thereby limiting the two adjacent moving members 50 to prevent the two adjacent moving members 50 from being separated from each other. Moreover, the second limiting surface 568 of the second limiting part 56 of each moving member 50 abuts against the first limiting surface 544 of the first limiting part 54 of the rear moving member 50, thereby limiting a track of the relative movement of the adjacent two moving members 50.

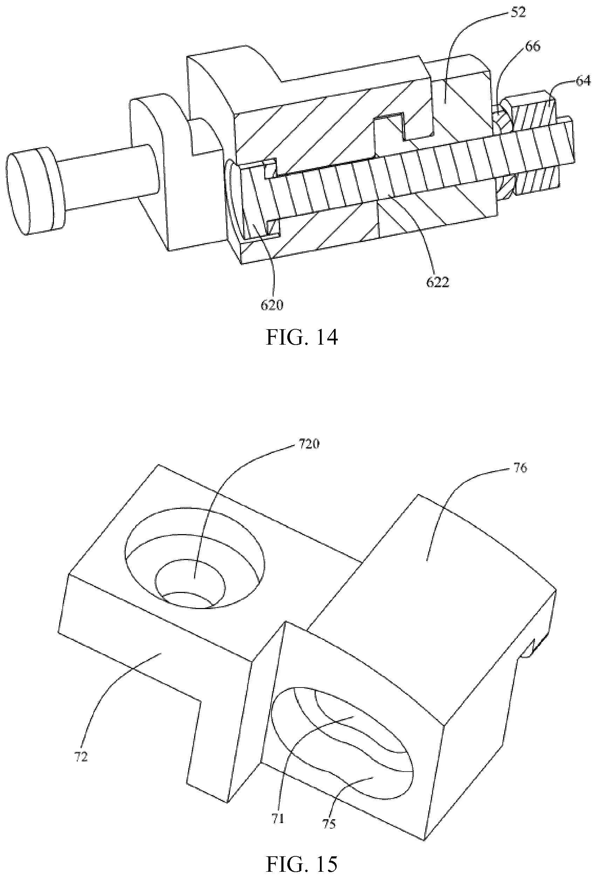

In this embodiment, a relative moving track of the adjacent two moving members 50 are limited by the positioning groove 55, the limit groove 51, the connecting member 60, the first limiting part 54 and the second limiting part 56. Specifically, the left side surface 514 and the right side surface 514 of the limit groove 51 of the moving member 50 are arc surfaces having a diameter which equals to a distance between the top surface 512 and the bottom surface 510 of the limit groove 51, and as same as that of the through hole 53. The left side surface 554 and the right side surface 554 of the positioning groove 55 of the moving member 50 are also arc surfaces having a diameter which equals to the distance between the top surface 552 and the bottom surface 550 of the positioning groove 55. Referring to FIG. 14, the outer diameter of the rod portion 622 of the rod member 62 is slightly less than or equals to the diameter of the through hole 53, and the outer diameter of the head portion 620 is slightly less than or equals to a distance between the top surface and the bottom surface of the positioning groove 55. When the rod member 62 is disposed in the positioning groove 55 and the limit groove 51 of the moving member 50, the head portion 620 is engaged with the positioning groove 55, the rod portion 622 is disposed in the limit groove 51 and further passes through the through hole 53 of the rear moving member 50. The rod member 62 serves as a rotating shaft of the adjacent two moving members 50. Due to the shape limitation of the limit groove 51, the movement of the moving member 50 relative to the rear adjacent moving member 50 is also limited correspondingly. In particular, the rotating center of the moving member 50 relative to the rear adjacent moving member 50 coincides with the center 012 of the second limiting surface 568, the center O11 of the second positioning surface, the center O1 of the limit groove 51, the center O5 of the positioning groove 55, the center O2 of the bottom surface 510, the center O3 of the top surface 512, the center O6 of the bottom surface 550, and the center O7 of the top surface 552 along the first direction. In other words, the rotating center of each moving member 50 relative to the adjacent moving member 50 is below the bottom surface of the adjacent moving member 50. Furthermore, in order to prevent unnecessary rotation of the moving member 50 during rotating, the first limiting surface 544, the second limiting surface 568, the first positioning surface 546, and the second positioning surface 566 of the moving member 50 cooperatively limit the moving track of the moving member 50. The second limiting surface 568 of each moving member 50 abuts against the first limiting surface 544 of the rear adjacent moving member 50, and the second positioning surface 566 of each moving member 50 abuts against the first positioning surface 546 of the rear adjacent moving member 50. The center 012 of the second limiting surface 568 and the center O11 of the second positioning surface 566 of the moving member 50 coincide with the center O9 of the first limiting surface 544 and the center O10 of the second limiting surface 568 of the rear adjacent moving member 50 along the first direction, and coincide with the center O1 of the limit groove 51, the center O5 of the positioning groove 55, and the center O2 of the bottom surface 510, the center O3 of the top surface 512, the center O6 of the bottom surface 550, the center O7 of the top surface 552 of the moving member 50 along the first direction, so the first limiting surface 544, the second limiting surface 568, the first positioning surface 546, the second positioning surface 566 can further allow the adjacent two moving members 50 to move along a preset track, and can prevent unnecessary rotation of the moving member 50. On the other hand, before the relative rotation of the two moving members 50 (ie, the supporting assembly 40 is in the unfolded state), the convex top surfaces of the two moving members 50 are staggered at an intersection of the two moving members 50; when the two moving members are relatively rotated (ie, the supporting assembly 40 is in the bent state), the top surfaces of the two moving members 50 are aligned to form a continuous convex arc surface. Thereby, it is convenient to support a curved surface.

The positioning groove 55 and the limit groove 51 of each moving member 50 are aligned with the through hole 53 of the adjacent moving member 50, so that the two adjacent moving members 50 are staggered and coupled to each other. These moving members 50, which are staggered and coupled in series, form the groups of supporting assemblies. Since the moving members 50 need to be staggered and coupled in series, if the number of moving members 50 is large, the width of the supporting assembly 40 in the left-right direction will be large. When the supporting assembly 40 is applied to a miniaturized electronic device, such as a mobile phone or a portable video player, the width of the supporting assembly 40 in the left-right direction occupies a large space, which is disadvantageous to miniaturization of the device. Therefore, in the present embodiment, the supporting assembly 40 is divided into a plurality of groups separated from each other, such that the width of each group is controlled within a small range. In this embodiment, there are four groups of supporting assemblies 40 along a front-rear direction, wherein the moving members 50 of the first group and the third group of supporting assembly 40 are described in the above embodiments, and the moving members of the second group and the fourth group of the supporting assembly 40 are disposed bilaterally symmetrically with respect to the structure of the moving member 50 in each of the above embodiments. In the front-rear direction, the first group and the third group of supporting assemblies 40 couple the adjacent first housing 10 and the second housing 20 from left to right, and the second group and the fourth group of supporting assemblies 40 couple the adjacent first housing 10 and second housing 20 from right to left. Thus, the connection portion 34 of the flexible screen 30 located between the first housing 10 and the second housing 20 can be better supported.

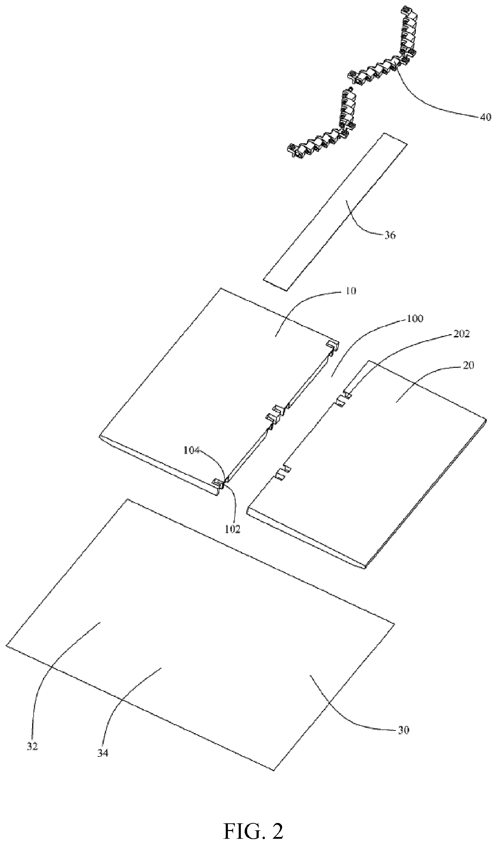

Referring to FIGS. 2 and 15, each group of supporting assembly 40 includes two moving members 70 which are fixed to the first housing 10 and the second housing 20 respectively. The two moving members 70 are respectively located on the front and rear sides of each group of supporting assembly 40. A right side portion of a moving member 70 on a front side of the first and the third groups of supporting assemblies 40 has a same structure as a right side portion of the moving member 50, which means that it also includes a positioning groove 75, a limit groove 71, a second limiting part 76, a second limiting surface, a second positioning surface, and the like. For details, it can be referred to the descriptions of the related structure of the moving member 50. A left side portion of the moving member 70 includes a bracket 72 in a L-shape whose top portion defines a screw hole 720 aligned with the screw hole of the first housing 10. The bracket 72 of the moving member 70 is inserted into the groove 102 of the first housing 10, and the screw passes through the screw hole 720 of the bracket 72 and is locked into the screw hole of the first housing 10, thereby achieving fixation of the moving member 70 and the first housing 10. A left side portion of the moving member 70 on a rear side of the first and third groups of the supporting assembly 40 has a same structure as a left side portion of the moving member 50, which means that it includes a through hole, a first limiting part, a first limiting surface, a first positioning surface, etc. The details are shown in the related structure descriptions of the moving member 50. The right side portion of the moving member 70 includes a bracket 72 in a L-shape whose top portion defines a screw hole 720 aligned with the screw hole of the second housing 20. The bracket 72 of the moving member 70 is inserted into the groove 202 of the second housing 20, and the screw passes through the screw hole 720 of the bracket 72 and is locked into the screw hole of the second housing 20, thereby achieving fixation of the moving member 70 and the second housing 20. The moving member 70 of the front side of the second and fourth groups of supporting assembly 40 is bilaterally symmetrically disposed with the moving member 70 of the rear side of the first and third groups of supporting assemblies 40, and the moving member 70 of the rear side of the second and fourth groups of supporting assemblies 40 are bilaterally symmetrically disposed with respect to the moving member 70 of the front side of the first and third groups of supporting assemblies 40. Thus, each group of supporting assembly 40 movably couples the first housing 10 to the second housing 20 by the moving member 70.

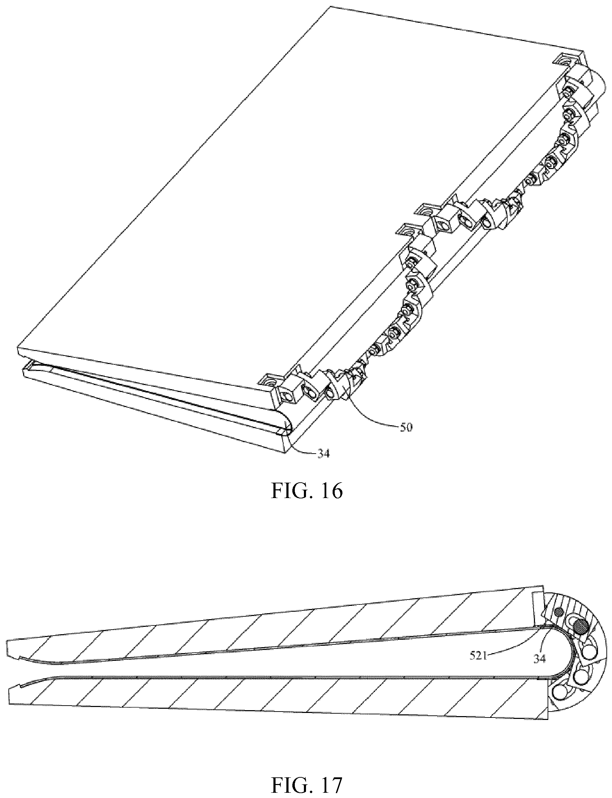

The bottom surfaces 521 of each of the moving members 50, 70 are used for directly or indirectly abutting against the top surface of the connecting portion 34 of the flexible screen 30, thereby supporting the connecting portion 34. In this embodiment, the centers O1 of the limit grooves 51 and the centers O5 of the positioning grooves 55 of each of the moving members 50 and the moving members 70, and the centers O2 of the bottom surfaces 510, the centers O3 of the top surfaces 512, the centers O6 of the bottom surface 550, the centers O7 of the top surfaces 552, the centers O9 of the first limiting surfaces 544, the centers 012 of the second limiting surfaces 568, the centers O10 of the first positioning surfaces 546, the centers O11 of the second positioning surfaces 566 are all located inside of the connecting portion 34 of the flexible screen 30. The centers O0 of the top surfaces 520 of the base 52 of each of the moving members 50, 70 is below the connecting portion 34 of the flexible screen 30. Since the relative rotating centers of the moving members 50, 70 are all located inside of the connecting portion 34 of the flexible screen 30, when the first housing 10 and the second housing 20 rotate relatively, the length of the connecting portion 34 between the first housing 10 and the second housing 20 remains unchanged, without being compressed or stretched to avoid damage to the flexible screen30. Referring to FIGS. 16-17, furthermore, in this embodiment, the bottom surfaces 521 of the moving members 50, 70 are detachably abutted against the top surface of the connecting portion 34 of the flexible screen 30. In other words, the moving members 50, 70 are not directly or indirectly fixed to the connecting portion 40 of the flexible screen 30, but are movably supported by the connecting portion 34 of the flexible screen 30 for a more flexible supporting effect. When the connecting portion 34 is unfolded, the bottom surfaces 521 of the moving members 50, 70 abut against the connecting portion 34; when the connecting portion 34 is bent or folded, the bottom surfaces 521 of the moving members 50, 70 are partially abutted against the connecting portion 34, and the other portions of the bottom surfaces 521 of the moving members 50, 70 are separated with the connecting portion 34. In other words, the area supported by the moving members 50, 70 when the connecting portion 34 is bent is less than the area supported by the moving members 50, 70 when the connecting portion 34 is unfolded.

When the supporting assembly 40 is unfolded, the moving members 50, 70 are staggered one by one and arranged in a diagonal line, and the top surfaces 520 of the moving members 50, 70 are also staggered to form a non-continuous surface; when the supporting assembly 40 is bent, the moving members 50, 70 are centered to form an arc shape, the top surfaces 520 of the moving members 50, 70 are continuous with each other to form a continuous arc surface.

In order to better support the flexible screen 30, a support plate 36 is further provided between the bottom surfaces 521 of the moving members 50, 70 and the connecting portion 34 of the flexible screen 30 (see FIG. 2). The support plate 36 may be made of flexible materials such as polypropylene, polyethylene terephthalate, polyethylene, or the like. An area of the support plate 36 is slightly greater than an area of the connecting portion 34, and opposite sides of the support plate 36 are respectively attached to positions of the bottom surfaces of the first housing 10 and the second housing 20 close to the groove 100. The bottom surfaces 521 of the moving members 50, 70 of the supporting assembly 40 abut against a top surface of the support plate 36, and a bottom surface of the support plate 36 is fixed to the top surface of the connecting portion 34, whereby the supporting assembly 40 supports the connecting portion 34 through the supporting plate 36, so as to avoid damage to the connecting portion 34 caused by the moving members 50, 70 directly contacting with the connecting portion 34. The support plate 36 also has different contact relationships with the supporting assembly 40 in different states. The bottom surfaces 521 of the moving members 50, 70 are detachably abutted against the top surface of the support plate 36. When the connecting portion 34 is unfolded, the bottom surfaces 521 of the moving members 50, 70 abut against the support plate 36; when the connecting portion 34 is bent, the bottom surfaces 521 of the moving members 50, 70 are partially abutted against the support plate 36, and the other portion of the bottom surfaces 521 of the moving members 50, 70 is separated from the support plate 36. In other words, the contact area of the support plate 36 with the moving members 50, 70 when the connecting portion 34 is bent is less than the contact area of the supporting plate 36 with the moving members 50, 70 when the connecting portion 34 is unfolded.

In the above embodiments, each moving member 50 has the first limiting part 54 and the second limiting part 56. It can be understood that in some conditions where a demand for accuracy is not high, the supporting assembly 40 may only include two moving members 50, one of the two moving members 50 has the first limiting part 54 and the other of the two moving members 50 has the second limiting part 56. One of the moving members 50 is fixed to the first housing 10, and the other of the two moving members 50 is fixed to the second housing 20. The connection portion 34 of the flexible screen 30 can also be movably supported by the first limiting part 54 abutting against the second limiting part 56. In addition, the first limiting part 54 may also have only the first positioning surface 546, and the second limiting part 56 may also have only the second positioning surface 566, in other words, the first limiting part 54 may not include the first limiting surface 544, and the second limiting part 56 may not include the second limiting surface 568. It can be understood that the moving member 50 may also not include the first limiting part 54 or the second limiting part 56, and the relative moving track of the two adjacent moving members 50 is limited by the positioning groove 55 and the limit groove 51. Moreover, the moving member 50 can also have only the limit groove 51, which can also limit the moving track of the moving member 50.

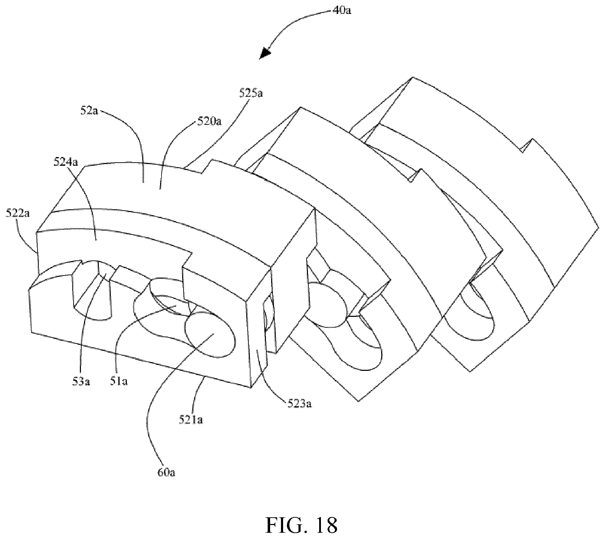

Referring to FIGS. 18-19, a supporting assembly 40a of another embodiment of the present disclosure is shown. The supporting assembly 40a of the present embodiment functions the same as the supporting assembly 40 of the foregoing embodiment, which is used for movably coupling the adjacent first housing 10 and the second housing 20, and supporting the support plate 36 or the connecting portion 34 of the flexible screen 30. The related structures of the first housing 10, the second housing 20, the support plate 36, and the flexible screen 30 are the same as those of the foregoing embodiment. The supporting assembly 40a of the present embodiment is also formed by a plurality of moving members 50a coupled in series. Each moving member 50a also includes a base 52a, a first limiting part 54a formed on a front side of the base 52a, and a second limiting part 56a formed on a rear side of the base 52a. The base 52a defines a through hole 53a and a limit groove 51a for engaging with the connecting member 60a so as to movably couple with the base 52a of the adjacent moving member 50a. Furthermore, the base 52a of the present embodiment includes a first base plate 52b and a second base plate 52c coupled to the first base plate 52b. The first base plate 52b is manufactured separately from the second base plate 52c; the first base plate 52b and the second base plate 52c are fixed together by welding or the like when assembled with the connecting member 60a.

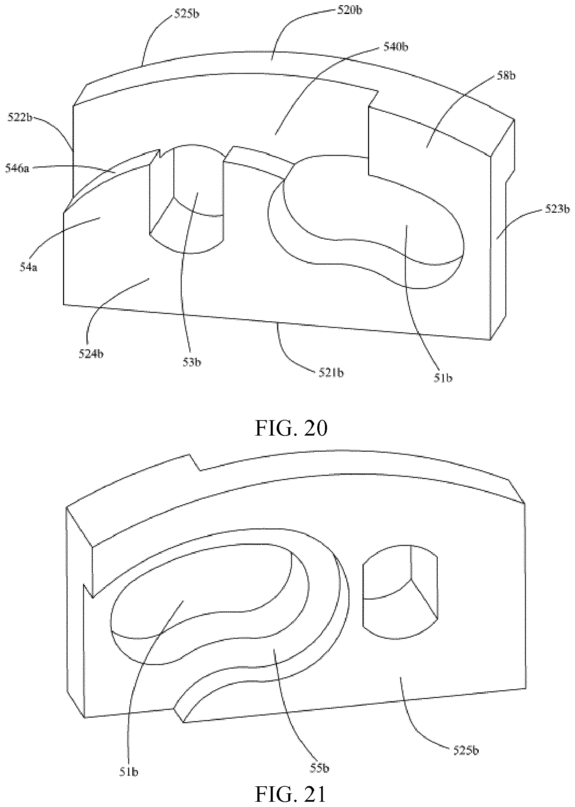

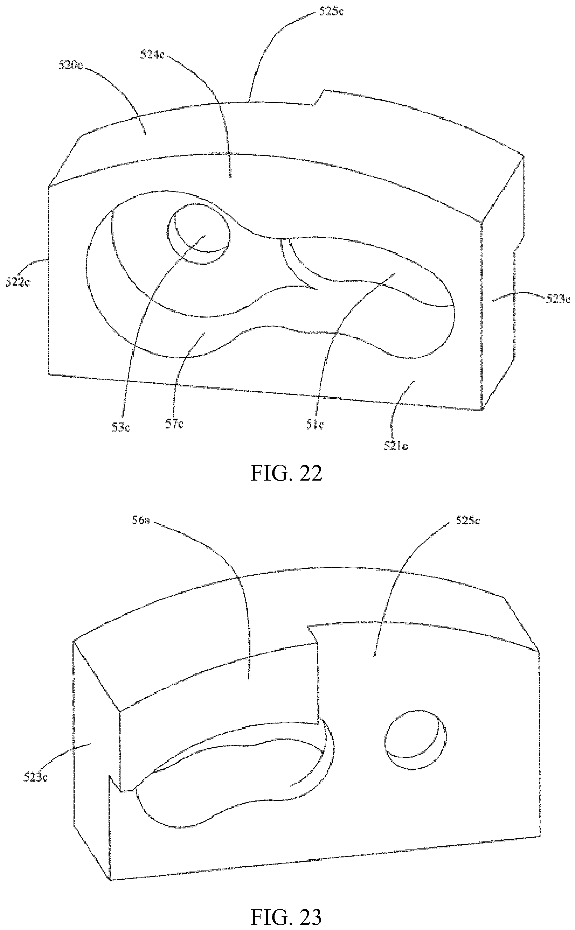

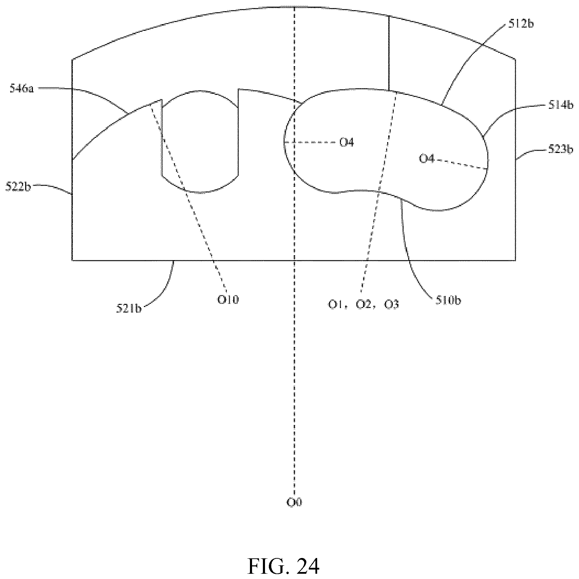

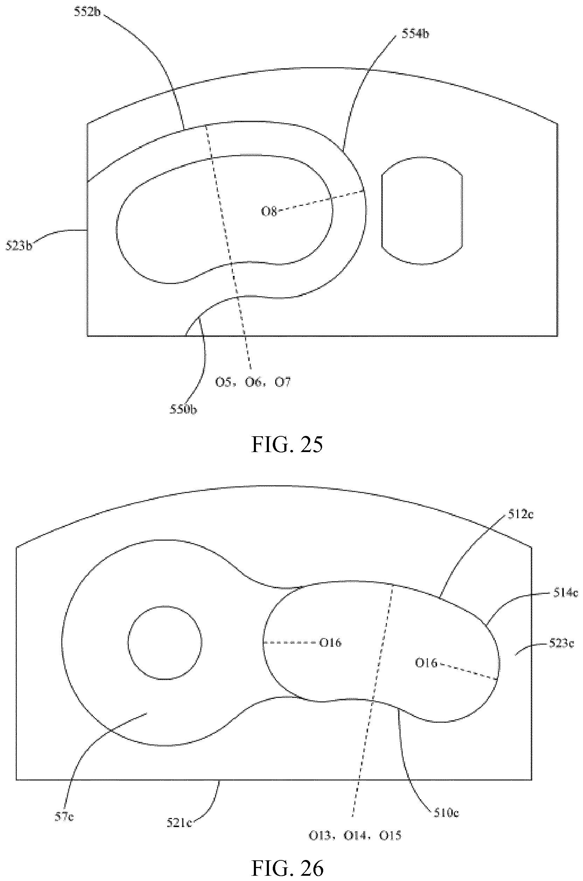

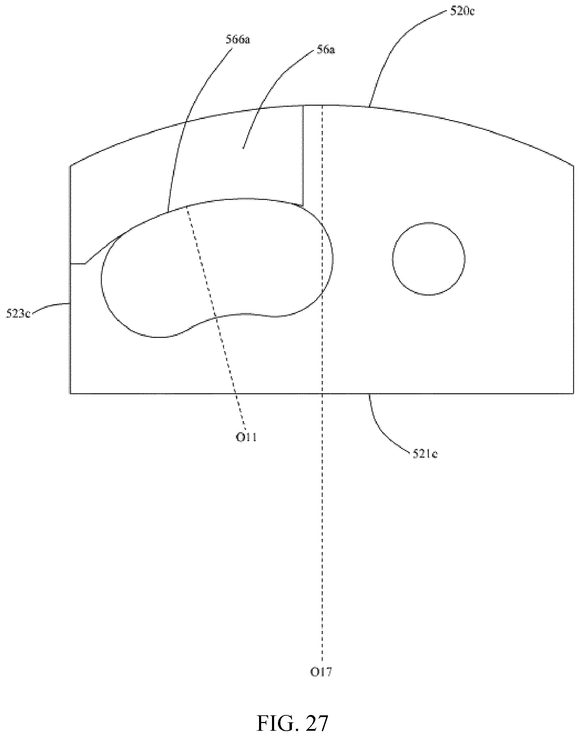

Referring to FIGS. 20-27, an outer contour of the first base plate 52b is the same as an outer contour of the base 52 of the foregoing embodiment. A bottom surface 521b of the first base plate 52b is in a flat rectangular shape; a left end surface 522b and a right end surface 523b of the first base plate 52b are planes perpendicular to the bottom surface 521b; a front side surface 524b and a rear side surface 525b of the first base plate 52b are also planes perpendicular to the bottom surface 521b. The area of the front side surface 524b and the rear side surface 525b is greater than the area of the left end surface 522b and right end surface 523b; the top surface 520b of the first base plate 52b is a convex surface, preferably an upper convex arc surface, and its center O0 is located below the bottom surface 521b. A left side portion of the first base plate 52b defines a through hole 53b, and a right side portion of the first base plate 52b defines a limit groove 51b. The through hole 53b cuts through the first base plate 52b from front to rear. An inner wall surface of the through hole 53b includes two opposite planes, thus reducing a width of the through hole 53b in the left-right direction, thereby saving the area occupied by the through hole 53b. The limit groove 51b also cuts through the first base plate 52b from front to rear. The shape and the orientation and the angle of the extending track of the limit groove 51b of the present embodiment are the same as that of the limit groove 51 of the foregoing embodiment. The extending track of the limit groove 51b is also an arc shape whose center O1 is located under the bottom surface 521b of the first base plate 52b. The limit groove 51b of the present embodiment also includes a bottom surface 510b, a top surface 512b, and two side surfaces 514b coupling the top surface 512b and the bottom surface 510b. The bottom surface 510b is an up-convex curved surface, the top surface 512b is an up-concave curved surface, and the side surfaces 514b are curved surfaces concaving to the left and right, respectively. In this embodiment, the curvature of the bottom surface 510b is greater than that of the top surface 512b, and the top surface 512b is parallel to the bottom surface 510b. The curved surface of the bottom surface 510b is a part of an arc surface, and its center O2 is located below the bottom surface 521b of the first base plate 52b. The curved surface of the top surface 512b is also a part of an arc surface, and its center O3 is located below the bottom surface 521b of the first base plate 52b, and the center O3 coincides with the center O2 of the bottom surface 510b and the center O1 of the limit groove 51b. In particular, the center O1 of the limit groove 51b, the center O2 of the bottom surface 510b, and the center O3 of the top surface 512b are located close to the bottom surface 521b of the first base plate 52b. The side surfaces 514b are smoothly coupled the top surface 512b and the bottom surface 510b. The side surface 514b is also a part of an arc surface, but its center O4 is located inside the limit groove 51b, higher than the bottom surface 510b, and below the top surface 512b. The centers O4 of the two side surfaces 514b are different in height, wherein the center O4 of the left side surface 514b is higher than the center O4 of the right side surface 514b, causing the limit groove 51b to incline to the right. In other words, the center O3 of the top surface 512b, and the center O2 of the bottom surface 510b are below the centers O4 of the side surfaces 514b.

The first base plate 52b defines a groove 540b in its front side surface 524b. The groove 540b extends downward from the top surface 512b to inside of the first base plate 52b, and the groove 540b also extends forward through the front side surface 524b of the first base plate 52b. The portion of the first base plate 52b located below the groove 540b forms a first limiting part 54a. The bottom surface of the groove 540b (i.e., a top surface of the first limiting part 54a) forms the first positioning surface 546a. The top portion of the through hole 53b cuts through the first positioning surface 546a to separate the first positioning surface 546a into two separate sections. The first positioning surface 546a is an arc surface, and its center O10 is located below the bottom surface 521b of the first base plate 52b, and the center O10, the center O1 of the limit groove 51b, the center O2 of the bottom surface 510b and the center O3 of the top surface 512b are consistent in height. The height of the center O10 of the first positioning surface 546a is higher than the height of the center O0 of the top surface 520b of the first base plate 52b. In particular, the center O10 of the first positioning surface 546a is located close to the left end surface 522b of the first base plate 52b; the center O1 of the limit groove 51b, the center O2 of the bottom surface 510b, and the center O3 of the top surface 512b are located close to the right end surface 523b of the first base plate 52b. The curvature of the first positioning surface 546a is greater than that of the top surface 520b of the first base plate 52b. An inclination direction of the first positioning surface 546a is the left, and is opposite to the inclination direction of the limit groove 51b. A left end of the first positioning surface 546a is aligned with a left end surface 522b of the first base plate 52b, and a right end of the first positioning surface 546a terminates at an edge of the limit groove 51b.

The front side surface 524b of the first base plate 52b further includes a stopper 58b protruding from a position close to the limit groove 51b. The stopper 58b is located above the limit groove 51b and is located close to the top surface 520b and the right end surface 523b of the first base plate 52b. The stopper 58b is used for limiting a moving range of the moving member 50a. When the supporting assembly 40a is in an unfolded state, the moving member 50a is abutted with the stopper 58b of the rear adjacent moving member 50a; when the supporting assembly 40a is in a bent state, the moving member 50a is separated from the stopper 58b of the rear adjacent moving member 50a.

The rear side surface 525b of the first base plate 52b defines a positioning groove 55b around the limit groove 51b. The area of the positioning groove 55b is greater than that of the limit groove 51b. The positioning groove 55b extends forward from the rear side surface 525b of the first base plate 52b to inside of the first base plate 52b, that is, the positioning groove 55b does not cut through the first base plate 52b from rear to front. An extending track of the positioning groove 55b is also in an arc shape whose center O5 is below the bottom surface 521b of the first base plate 52b. The positioning groove 55b also includes a top surface 552b, a bottom surface 550b, and two side surfaces 554b. The top surface 552b of the positioning groove 55b is also a concave curved surface and is parallel to the top surface 512b of the limit groove 51b; the bottom surface 550b of the positioning groove 55b is a convex curved surface and is parallel to the bottom surface 510b of the limit groove 51b; the side surfaces 554b of the positioning groove 55b each is a concave curved surface, and is parallel to the side surface 514b of the limit groove 51b. In this embodiment, the curvature of the bottom surface 550b of the positioning groove 55b is greater than that of the top surface 552b. The curved surface of the bottom surface 550b is a part of an arc surface, and its center O6 is located below the bottom surface 521b of the first base plate 52b. The curved surface of the top surface 552b is also a part of the arc surface, and its center O7 is located below the bottom surface 521b of the first base plate 52b and coincides with the center O6 of the bottom surface 550b. In particular, the center O5 of the positioning groove 55b, the center O6 of the bottom surface 550b, and the center O7 of the top surface 552b are located close to the bottom surface 521b of the first base plate 52b, and coincide with the center O1 of the limit groove 51b and the center O2 of the bottom surface 510b, and the center O3 of the top surface 512b along the first direction. The first direction is a direction from one side of the base 52a to the opposite side. In the present embodiment, the first direction is a direction from the front side surface of the base 52a to the rear side surface or a direction from the rear side surface to the front side surface. In other words, the first direction is a thickness direction of the base 52a, or a depth direction of the limit groove 51a or the positioning groove 55b. The side surfaces 554b of the positioning groove 55b smoothly couple the top surface 552b and the bottom surface 550b. The side surface 554b is also a part of an arc surface, but its center O8 is located inside of the positioning groove 55b and is higher than the bottom surface 550b, and below the top surface 552b. The centers O8 of the side surfaces 554b of the positioning groove 55b coincide with the centers O4 of the side surfaces 514b of the limit groove 51b along the first direction. In this embodiment, the positioning groove 55b has only one side surface 554b, and the other side of the positioning groove 55b cuts through the right side surface 523b of the first base plate 52b. An inclination direction of the positioning groove 55b is the right.

The second base plate 52c is located on a rear side of the first base plate 52b. An outer contour of the second base plate 52c is the same as that of the first base plate 52b and the base 52 of the foregoing embodiment. The second base plate 52c defines a through hole 53c and a limit groove 51c cutting through the front side surface 524c and the rear side surface 525c. The through hole 53c of the second base plate 52c is aligned with the through hole 53b of the first base plate 52b, and the limit groove 51c is aligned with the limit groove 51b of the first base plate 52b. The through hole 53c of the second base plate 52c is circular and an area of the through hole 53c is less than that of the through hole 53b of the first base plate 52b. The shape, orientation, and size of the limit groove 51c of the second base plate 52c are the same as those of the limit groove 51b of the first base plate 52b, as described in the limit groove 51b of the first base plate 52b. The extending track of the limit groove 51c is an arc shape whose center 013 is located below the bottom surface 521c of the second base plate 52c. The limit groove 51c of this embodiment also includes a bottom surface 510c, a top surface 512c, and two side surfaces 514c coupling the top surface 512c and the bottom surface 510c. The bottom surface 510c is an up-convex curved surface, the top surface 512c is an up-concave curved surface, and the side surfaces 514c are concave curved surfaces concaving to the left and to the right, respectively. In this embodiment, the curvature of the bottom surface 510c is greater than that of the top surface 512c, and the top surface 512c is parallel to the bottom surface 510c. The curved surface of the bottom surface 510c is a part of an arc surface, and its center 014 is located below the bottom surface 521c of the second base plate 52c. The curved surface of the top surface 512c is also a part of an arc surface, and its center 015 is located below the bottom surface 521c of the second base plate 52c, and the center 015 coincides with the center 014 of the bottom surface 510c and the center 013 of the limit groove 51c. In particular, the center 013 of the limit groove 51c, the center 014 of the bottom surface 510c and the center 015 of the top surface 512c are located close to the bottom surface 521c of the second base plate 52c. The side surfaces 514c smoothly couples the top surface 512c and the bottom surface 510c. The side surfaces 514c each is also a part of an arc surface, but its center 016 is located inside of the limit groove 51c and is higher than the bottom surface 510c, and is below the top surface 512c. The centers 016 of the two side surfaces 514c are different in height, wherein the center 016 of the left side surface 514c is higher than the center 016 of the right side surface 514c, causing the limit groove 51c to incline to the right. In other words, the center 015 of the top surface 512c, the center 014 of the bottom surface 510c are below the centers 016 of the side surfaces 514c. The rear side surface 525c of the second base plate 52c includes a second limiting part 56a protruding from a position close to the limit groove 51c. The second limiting part 56a is located close to the top surface 520c and the right side surface 523c of the second base plate 52c. The top surface of the second limiting part 56a is aligned with the top surface 520c of the second base plate 52c, the right end surface of the second limiting part 56a is aligned with the right end surface 523c of the second base plate 52c, the left end surface of the second limiting part 56a is located close to the left side surface 514c of the limit groove 51c, and the bottom surface of the second limiting part 56a is located close to the top surface 512c of the limit groove 51c. The bottom surface of the second limiting part 56a forms a second positioning surface 566a. The second positioning surface 566a is an arc surface, and its center O11 is located below the bottom surface 521c of the second base plate 52c. The height of the center O11 of the second positioning surface 566a is the same as that of the center 013 of the limit groove 51c, the center 014 of the bottom surface 510c and the center 015 of the the top surface 512c, and further as same as that of the center O10 of the first positioning surface 546a of the first base plate 52b and the center O1 of the limit groove 51b and the center O2 of the bottom surface 510b and the center O3 of the top surface 512b. The height of the center O11 of the second positioning surface 566a is greater than that of the center 017 of the top surface 520c of the second base plate 52c. In particular, the center O11 of the second positioning surface 566a is located close to the right end surface 523c of the second base plate 52c. The center O11 of the second positioning surface 566a, the center 013 of the limit groove 51c, the center 015 of the top surface 512c and the center 014 of the bottom surface 510c coincide along the first direction, and further coincides with the center O1 of the limit groove 51b of the first base plate 52b, and the center O2 of the bottom surface 510b and the center O3 of the the top surface 512b along the first direction. The curvature of the second positioning surface 566a is greater than that of the top surface 520c of the second base plate 52c. An inclination direction of the second positioning surface 566a is the right, which is the same as that of the limit groove 51c. The left end of the second positioning surface 566a is adjacent to the left side surface 514c of the limit groove 51c, and the right end of the second positioning surface 566a is aligned with the right end surface 523c of the second base plate 52c.

The second base plate 52c also defines a receiving groove 57c in its front side surface 524c. The receiving groove 57c extends to inside of the second base plate 52c from front to rear. A left side contour of the receiving groove 57c is circular, and a right side contour of is the same as that of the limit groove 51c. The left side of the receiving groove 57c interconnects with the through hole 53c, and the right side interconnects with the limit groove 51c.

The first base plate 52b and the second base plate 52c are fixed together by welding, bonding, or the like to form a complete moving member 50a. The outer contours of the first base plate 52b and the second base plate 52c are aligned with each other; the through hole 53b of the first base plate 52b is aligned with and interconnected with the through hole 53c of the second base plate 52c to cooperatively constitute the through hole 53a of the moving member 50a; the limit groove 51b of the first base plate 52b is aligned with and interconnected with the limit groove 51c of the second base plate 52c to form the limit groove 51a of the moving member 50a; the positioning groove 55b of the first base plate 52b is interconnected with the receiving groove 57c of the second base plate 52c. The bottom surface 521b of the first base plate 52b is combined with the bottom surface 521c of the second base plate 52c to form the bottom surface 521a of the base 50a. The top surface 520b of the first base plate 52b is combined with the top surface 520c of the second base plate 53b to form the top surface 520a of the base 52a. The left end surface 522b of the first base plate 52b is combined with the left end surface 522c of the second base plate 52c to form the left end surface 522a of the base 52a. The right end surface 523b of the first base plate 52b is combined with the right end surface 523c of the second base plate 52c to form the right end surface 523a of the base 52a. The front side surface 524b of the first base plate 52b forms the front side surface 524a of the base 52a. The rear side surface 525c of the second base plate 52c forms the rear side surface 525a of the base 52a.

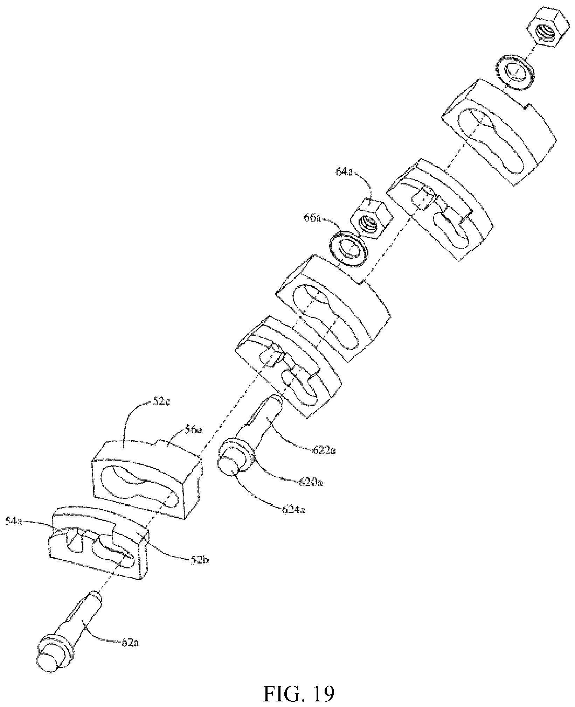

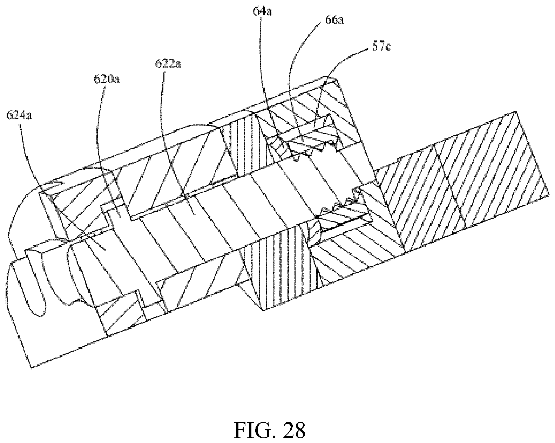

Referring to FIGS. 19 and 28, the adjacent moving members 50a are coupled in series through the connecting member 60a. In this embodiment, the connecting member 60a that is coupled in series with each two adjacent moving members 50a includes a rod member 62a and a locking member 64a that is sleeved on the rod member 62a. When assembled, the through hole 53a of each moving member 50a is aligned with the limit groove 51a of the adjacent moving member 50a, and the second limiting part 56a of each moving member 50a abuts against by the first limiting part 54a of the rear adjacent moving member 50a, and the first limiting part 54a of each moving member 50a abuts against the second limiting part 56a of the front adjacent moving member 50a. The rod member 62a passes through the limit groove 51a of each moving member 50a and penetrates into the through hole 53a of the rear adjacent moving member 50a. The locking member 64a is locked to one end of the rod member 62a penetrating into the through hole 53a of the rear adjacent moving member 50a, thereby limiting the rod member 62a. In the present embodiment, the rod member 62a includes a head portion 620a, a rod portion 622a extending rearward from the head portion 620a, and an end portion 624a extending forward from the head portion 620a. The rod portion 622a is received in the limit grooves 51b and 51c of the first base plate 52b of the moving member 50a, the through hole 53b of the first base plate 52b and the through hole 53c of the second base plate 52c of the rear adjacent moving member 50a. In particular, the rod portion 622a has two planes for abutting against the two planes of the through hole 53b, respectively. The head portion 620a is received in the positioning groove 55b of the first base plate 52b of the moving member 50a, and is located between the front side surface of the positioning groove 55b of the first base plate 52b and the front side surface 524c of the second base plate 52c to prevent the rod member 622a from falling off. The end portion 624a is inserted into the limit groove 51b of the first base plate 52b. The rod portion 622a includes a screw threads formed on one end of the rod portion 622a away from the head portion 620a. In this embodiment, the locking member 64a is a nut that is locked to the screw threads at the end of the rod portion 622a to prevent the rod member 62a from falling off. In order to adjust the rotational damping between the adjacent moving members 50a, the rod portion 622a further includes a spring 66a. The spring 66a is located between the rear side surface 525a of the moving member 50a and the front side surface of the nut. By adjusting the nut on the screw threads of the rod member 62a, A degree to which the spring 66a is compressed can be adjusted, thereby adjusting the rotational damping between the adjacent moving members 50a. In this embodiment, the locking member 64a and the spring 66a are respectively received in the receiving groove 57c of the rear adjacent moving member 50a to protect the locking member 64a and the spring 66a.

The adjacent moving members 50a are coupled in series through the connection of the connecting member 60a. The first limiting part 54a of each moving member 50a abuts against the second limiting part 56a of the adjacent moving member 50a, wherein the first positioning surface 546a of the first limiting part 54a abuts against the second positioning surface 566a of the second limiting part 56a, thereby limiting the two adjacent moving members 50a and further limiting the relative moving track of the two adjacent moving members 50a.

In the present embodiment, the rod member 62a serves as a rotating shaft of the adjacent two moving members 50a. Due to the shape limitation of the limit groove 51a, the movement of the moving member 50a relative to the rear adjacent moving member 50a is also limited accordingly. In particular, a rotating center of the moving member 50a relative to the rear adjacent moving member 50a coincides with the centers O1, O13 of the limit groove 51a of the rear adjacent moving member 50a, and the center O3 of the top surface 512b, the center 015 of the top surface 512c, the center O2 of the bottom surface 510b, and the center 014 of the bottom surface 510c along the first direction, that is, the rotating center of each moving member 50a relative to the adjacent moving member 50a is below the bottom surface 521a of the adjacent moving member 50a. Further, in order to prevent unnecessary rotation of the moving member 50a during rotating, the first positioning surface 546a and the second positioning surface 566a of the moving member 50a cooperatively limit the moving track of the moving member 50a. The second positioning surface 566a of each moving member 50a abuts against the first positioning surface 546a of the rear adjacent moving member 50a. Due to the center O11 of the second positioning surface 566a of the moving member 50a coincides with the center O10 of the first positioning surface 546a of the rear adjacent moving member 50a along the first direction, and further coincides with the centers O1, 013 of the limit groove 51a and the center O3 of the top surface 512b, the center 015 of the top surface 512c, the center O2 of the bottom surface 510b, and the center 014 of the bottom surface 510c of the moving member 50a along the first direction, thereby the first positioning surface 546a, the second positioning surface 566a can further limit the relative movement of the adjacent two moving members 50a along a preset track, and can prevent the unnecessary rotation of the moving member 50a. Furthermore, the stopper 58b of the front side surface 524a of the moving member 50a can further limit the rotation of the front adjacent moving member 50a to prevent excessive rotation thereof. On the other hand, before the relative rotation of the two moving members 50a (ie, the supporting assembly 40a is in the unfolded state), the convex top surface 520a of the two adjacent moving members 50a is staggered at the intersection between the two adjacent moving members 50a; when the two adjacent moving members 50a are relatively rotated, the top surface 520a of the two adjacent moving members 50a gradually aligns with each other; after the two moving members 50a are relatively rotated (ie, the supporting assembly 40a is in the bent state), the top surfaces 520a of the two adjacent moving members 50a are aligned to form a continuous convex arc surface. Thereby, it is convenient to support the curved surface.

It can be understood that the supporting assembly 40a of the present embodiment can also be divided into multiple groups, and the front and rear moving members 50a of each group of supporting assembly 40a can also have a bracket fixed with the first housing 10 or the second housing 20 as in the foregoing embodiment, and the specific structure and the connection relationship of the bracket can be referred to the descriptions of the foregoing embodiment.

The bottom surface 521a of each moving member 50a is used for directly or indirectly abutting against the top surface of the connecting portion 34 of the flexible screen 30, thereby supporting the connecting portion 34. In this embodiment, the center O1 of the limit groove, the center 013 of the limit groove 51a, the center O5 of the positioning groove 55a, the center O2 of the bottom surface 510b, the center 014 of the bottom surface 510c, the center O6 of the bottom surface 550b, the center O3 of the top surface 512b, the center 015 of the top surface 512c, the center O7 of the top surface 552b, the center O10 of the first positioning surface 546a and the center O11 of the second positioning surface 566a of each moving member 50a are all located inside of the connecting portion 34 of the flexible screen 30. The center O0 of the top surface 520a of the base 52a of each moving member 50a is below the connecting portion 34 of the flexible screen 30. Since the relative rotating centers of the respective moving members 50a are all located inside the connecting portion 34 of the flexible screen 30, when the first housing 10 and the second housing 20 are relatively rotated, the length of the connecting portion 34 between the first housing 10 and the second housing 20 remains unchanged without being compressed or stretched to avoid damage to the flexible screen 30. The bottom surface 521 of the moving member 5a is detachably abut against the top surface 521a of the connecting portion 34 of the flexible screen 30. In other words, the moving member 50a is not directly or indirectly fixed to the connecting portion 40 of the flexible screen 30, but movably supports the connecting portion 34 of the flexible screen 30 to provide a more flexible supporting effect. When the connecting portion 34 is unfolded, the bottom surface 521a of the moving member 50a abuts against the connecting portion 34; when the connecting portion 34 is bent, the bottom surface 521a of the moving member 50a partially contacts the connecting portion 34, and the other portion of the bottom surface 521a of the moving member 50a is separated from the connecting portion 34. In other words, the area supported by the moving member 50a when the connecting portion 34 is bent is less than the area supported by the moving member 50a when the connecting portion 34 is unfolded.

When the supporting assembly 40a is unfolded, the moving members 50a are staggered one by one and arranged in a diagonal line, and the top surfaces 520a of moving members 50a are also staggered to present a non-continuous surface; when the supporting assembly 40a is bent, the moving members 50a are centered in an arc shape, and the top surface 520a of the moving members 50a are continuous with each other to form a continuous curved surface.

In order to better support the flexible screen 30, a support plate 36 is further provided and located the bottom surface 521a of the moving member 50a and the connecting portion 34 of the flexible screen 30. The support plate 36 can be made of flexible materials such as polypropylene, polyethylene terephthalate, polyethylene or the like. The area of the support plate 36 is slightly greater than the area of the connecting portion 34, and the opposite sides of the support plate 36 are respectively attached to the positions of the bottom surfaces of the first housing 10 and the second housing 20 close to the groove 100. The bottom surface 521a of the moving member 50a of the supporting assembly 40a abuts against the top surface of the support plate 36, and the bottom surface of the support plate 36 is fixed to the top surface of the connecting portion 34, whereby the supporting assembly 40a supports the connecting portion 34 through the support plate 36 to avoid damage to the connecting portion 34 caused by the moving member 50a directly contacting with the connecting portion 34. The support plate 36 also has different contact relationships with the supporting assembly 40a in different states. The bottom surface 521a of the moving member 50a is detachably abutting against the top surface of the support plate 36. When the connecting portion 34 is unfolded, the bottom surface 521a of the moving member 50a abuts against the support plate 36; when the connecting portion 34 is bent, the bottom surface 521a of the moving member 50a has a portion that abuts against the support plate 36 and another portion of the moving member 50a is separated from the support plate 36. In other words, the contact area of the support plate 36 with the moving member 50a when the connecting portion 34 is bent is less than the contact area of the support plate 36 with the moving member 50a when the connecting portion 34 is unfolded.

It can be understood that in some occasions where a demand to accuracy is not high, the supporting assembly 40a may also include only two moving members 50a, wherein one of the two moving members 50a has the first limiting part 54a and the other of the two moving members 50a has the second limiting part 56a. One of the moving members 50a is fixed to the first housing 10, and the other of the two moving members 56a is fixed to the second housing 20. By the first limiting part 54a abutting against the second limiting part 56a, the connection portion 34 of the movable support 30 can also be movably supported. Moreover, the first limiting part 54a may also have the first limiting surface and the first positioning surface 546a as in the foregoing embodiment, and the second limiting part 56a may also have the second limiting surface and the second positioning surface 566a. That is, the first limiting part 54a may further include the first limiting space, and the second limiting part 56a may further include the second limiting space. It is also understood that the moving member 50a may also not include the first limiting part 54a and the second limiting part 56a, and the relative moving track of the adjacent moving members 50a can also be limited by the positioning groove 55a and the limit groove 51a. Moreover, the moving member 50a may also have only the limit groove 51a, and may also have the effect of limiting the moving track of the moving member 50a.

In this embodiment, the connecting member 60a is relatively simple to assemble by separating the first base plate 52b and second base plate 52c, and only the head portion 620a needs to be located between the first base plate 52b and the second base plate 52c to realize the assembly of the connecting member 60a and the moving member50a.

The present disclosure can support various forms of the flexible screen 30 by coupling a plurality of relatively movable moving members 50, 50a, in particular, a curved shape and a support of a flat form. Therefore, the presenting support assembly 40, 40a can be widely applied to a foldable or bendable product of the flexible screen 30.

It can be understood that the "unfolded state" and "bent state" refer to two relative comparative state relationships in the present disclosure, and the supporting assembly 40, 40a/flexible device is not required to be fully unfolded or fully bent, as long as one state is compared to the other. If the state is further curved, it can be considered to belong to the curved state and the unfolded state, respectively.

It is also to be understood that the "center of the surface" as used in the present disclosure means that the distance from each position of the surface to the center is the same in a plane perpendicular to the surface. Similarly, the "center of the groove" as used by the present disclosure means that the distance from each position of the groove to the center is the same.

## Claims

1. A flexible device, comprising: a flexible screen and a supporting assembly for supporting the flexible screen, the supporting assembly comprising a plurality of moving members and connecting members each connecting two adjacent moving members of the plurality of moving members, adjacent moving members of the plurality of moving members moving relatively to support the flexible screen in an unfolded state or a bent state.

2. The flexible device according to claim 1, wherein, each of the plurality of moving members rotates relative to an adjacent moving member around a rotating center, and the rotating center of each of the plurality of moving members rotating relative to the adjacent moving member is in the flexible screen.

3. The flexible device according to claim 1, wherein, each of the plurality of moving members comprises a base, and a limit groove and a through hole defined on the base, each of the connecting members passes through the limit groove of each of the plurality of moving members and penetrates the through hole of the adjacent moving member.

4. The flexible device according to claim 3, wherein, the limit groove of each of the plurality of moving members is in an arc shape, and a center of the limit groove is in the flexible screen.

5. The flexible device according to claim 4, wherein, each of the plurality of moving members further comprises a first limiting part and a second limiting part respectively located on opposite sides of the base, the second limiting part of the each of the plurality of moving members movably abuts against the first limiting part of the adjacent moving member.

6. The flexible device according to claim 5, wherein, a moving track of the second limiting part of each of the plurality of moving members relative to the first limiting part of the adjacent moving member is in an arc shape, and a center of the moving track is in the flexible screen.

7. The flexible device according to claim 5, wherein, the first limiting part comprises a first positioning surface in an arc shape, the second limiting part comprises a second positioning surface in an arc shape, centers of the first positioning surface and the second positioning surface are in the flexible screen.

8. The flexible device according to claim 7, wherein, the first positioning surface and the second positioning surface are respectively inclined toward opposite ends of the base.

9. The flexible device according to claim 7, wherein, a height of a center of the first positioning surface is the same as a height of a center of the second positioning surface.

10. The flexible device according to claim 7, wherein, the center of the second positioning surface coincides with the center of the limit groove along a first direction, and the first direction is from one side of the base to an opposite side of the base.

11. The flexible device according to any one of claims 3 to 10, wherein, a bottom surface of the base movably supports the flexible screen.

12. The flexible device according to claim 11, wherein, an area of the bottom surface of the base supporting the flexible screen when the flexible device is in the unfolded state is greater than an area of the bottom surface of the base supporting the flexible screen when the flexible device is in the bent state.

13. The flexible device according to any one of claims 3 to 10, wherein, a top surface of the base is curved surface, when the flexible device is in the unfolded state, the top surfaces of the bases of the adjacent moving members are staggered; when the flexible device is in the bent state, the top surfaces of the bases of the adjacent moving members are continuous.

14. The flexible device according to any one of claims 3 to 10, wherein, a center of the top surface of the base is below the flexible screen.

15. The flexible device according to any one of claims 3 to 10, wherein, the base comprises a first base plate and a second base plate manufactured independently of each other, each of the connecting members comprises a head portion located between the first base plate and the second base plate, and an end portion penetrating into the limit groove of the first base plate, and a rod portion penetrating into the limit groove of the second base plate, the end portion and the rod portion are located on two opposite sides of the head portion.

16. The flexible device according to claim 15, wherein, a receiving groove is defined on a surface of the second base plate facing the first base plate, and the connecting member further comprises a locking member fixed to an end of the rod member, the locking member is received in the receiving groove of the second base plate of the adjacent moving member.

17. The flexible device according to any one of claims 1 to 10, further comprising a separated first housing and a second housing, the first housing and the second housing are separated through a groove, the flexible screen comprises a bonding portion that is attached the first housing and the second housing, and a connecting portion corresponding to the groove, the supporting assembly supports the connecting portion.

18. The flexible device according to claim 17, further comprising a support plate attached to the connecting portion, a bottom surface of each of the plurality of moving members is movably abutted against the support plate.

19. The flexible device according to claim 17, wherein, the support assembly is received in the groove, and the moving members located on opposite sides of the support assembly are fixed to the first housing and the second housing.

20. The flexible device according to claim 17, wherein, the support assembly extends from the first housing toward the second housing when the flexible device is in the unfolded state.
